# EUROPEAN PATENT SPECIFICATION

(11) **EP 3 163 032 B1**
(45) Date of publication and mention of the grant of the patent: **13.01.2021**
(21) Application number: 16196026.5
(22) Date of filing: 27.10.2016
(51) Int. Cl.: F01D 21/00, F02C 6/20, F02C 7/36

(54) **ELECTRICAL POWER GENERATION SYSTEM WITH BRAKING MECHANISM AND METHOD**
SYSTEM ZUR ERZEUGUNGS ELEKTRISCHER ENERGIE MIT BREMSMECHANISMUS SOWIE VERFAHREN
SYSTÈME DE GÉNÉRATION D'ÉNÉRGIE ÉLECTRIQUE AVEC MÉCANISME DE FREINAGE ET PROCÉDÉ

(30) Priority: 29.10.2015 US 201514926708
(43) Date of publication of application: 03.05.2017
(73) Proprietor: Hamilton Sundstrand Corporation, Charlotte, NC 28217 (US)
(72) Inventor: SPIERLING, Todd A., Rockford, IL Illinois 61109 (US); LEMMERS, Glenn C. Jr., Loves Park, IL Illinois 61111 (US)
(74) Representative: Dehns

(56) References cited:
- EP-A2- 2 644 867
- US-A- 2 852 912
- US-A1- 2006 005 544
- US-A1- 2012 015 776
- US-B1- 6 524 217

## Description

### BACKGROUND

The subject matter disclosed herein relates to aircraft. More specifically, the present disclosure relates to electrical power generation for aircraft.

Electrical power generators are utilized in many applications, such as aircraft or other vehicles to provide electrical power to various systems of the vehicle. In a typical aircraft application, the electrical generator is coupled to an aircraft engine and generates electrical power as the engine operates, to provide the system electrical power. The generator is coupled to the engine, such that whenever the engine is operating, the generator also operates and generates electrical power.

Some new aircraft applications, however, require large amounts of electrical power for a relatively small portion of flight time of the aircraft. The generator must, however, be sized for this peak electrical power usage, which in some aircraft may be about 1 megawatt, versus a typical electrical generator providing 0.1 megawatts. Allowing the larger generator to operate at all times the engine is operating would result in excess losses over the duration of the flight. It is desired to reduce the system losses of the power generation system when the electrical generator is not required. US 2012/015776 A1 describes an apparatus for selectively disengaging components of a geared turbofan gas turbine engine. EP 2644867 A2 describes a transmission assembly for an aircraft.

### BRIEF SUMMARY

An electrical power generation system for a vehicle is described in claim 1 and includes a prime mover, an electrical generator to generate electrical power and a gear box operably connected to the prime mover and the electrical generator to transfer rotational energy from the prime mover to the electrical generator. A braking mechanism is located at the gear box to selectably transfer rotational energy from the prime mover to the electrical generator for selective generation of electrical power.

The gear box includes a planetary gear arrangement.

The planetary gear arrangement includes a sun gear connected to the generator via a generator shaft, a plurality of planet gears meshed with the sun gear and configured to traverse about a sun gear axis and a ring gear meshed with and disposed radially outboard of the plurality of planet gears. The prime mover is coupled to one of the plurality of planet gears or the ring gear, and the braking mechanism is located at the other of the plurality of planet gears or the ring gear to stop rotation of the ring gear or traversal of the plurality of planet gears.

Additionally or alternatively, in this or other embodiments a planet carrier couples the prime mover to the plurality of planet gears.

Additionally or alternatively, in this or other embodiments the planetary gear arrangement includes a sun gear coupled to the prime mover, a plurality of planet gears meshed with the sun gear and configured to traverse about a sun gear axis, and a ring gear meshed with and disposed radially outboard of the plurality of planet gears. The generator is coupled to one of the plurality of planet gears or the ring gear, and the braking mechanism is positioned at the other of the plurality of planet gears or the ring gear to stop rotation of the ring gear or traversal of the plurality of planet gears.

Additionally or alternatively, in this or other embodiments the planetary gear arrangement includes a sun gear coupled to the braking mechanism, a plurality of planet gears meshed with the sun gear and configured to traverse about a sun gear axis, the plurality of planet gears coupled to one of the generator or the prime mover, a ring gear meshed with and located radially outboard of the plurality of planet gears, the ring gear coupled to the other of the generator or the prime mover. The braking mechanism is configured to stop rotation of the sun gear.

Additionally or alternatively, in this or other embodiments the braking mechanism includes a locking mechanism to maintain engagement of the braking mechanism.

Additionally or alternatively, in this or other embodiments the prime mover is a gas turbine.

Additionally or alternatively, in this or other embodiments the vehicle is an aircraft.

A method of electrical power generation for a vehicle is described in claim 7 that includes generating rotational energy at a prime mover, transferring the rotational energy to an electrical power generator, generating electrical power via the rotational energy transfer to the electrical power generator, and periodically stopping and/or starting the transfer of rotational energy from the prime mover to the electrical power generator via a braking mechanism in operable communication with the electrical power generator.

Additionally or alternatively, in this or other embodiments the rotational energy is transferred from the prime mover to the electrical power generator through a planetary gear arrangement.

Additionally or alternatively, in this or other embodiments the rotational energy is transferred from the prime mover to a plurality of planet gears, the rotational energy is transferred from the plurality of planet gears to a sun gear meshed with the plurality of planet gears, and the rotational energy is transferred from the sun gear to the electrical power generator.

Additionally or alternatively, in this or other embodiments the rotational energy is transferred from the plurality of planet gears to the sun gear by stopping rotation of a ring gear meshed with the plurality of planet gears via engagement of a braking mechanism at the ring gear.

Additionally or alternatively, in this or other embodiments the transfer of rotational energy is selectably stopped from the plurality of planet gears to the sun gear by disengagement of the braking mechanism.

Additionally or alternatively, in this or other embodiments the braking mechanism includes a locking mechanism to maintain engagement of the braking mechanism.

Additionally or alternatively, in this or other embodiments the prime mover is a gas turbine.

Additionally or alternatively, in this or other embodiments the vehicle is an aircraft.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic view of an embodiment of a power generation system according to the invention;
FIG. 2 is a schematic view of an embodiment of a planetary gear arrangement for a power generation system;
FIG. 3 is a schematic view of an embodiment of a power generation system in a clutched mode of operation;
FIG. 4 is a schematic view of an illustrative embodiment of a power generation system not forming part of the invention
FIG. 5 is a schematic view of yet another embodiment of a power generation system;
FIG. 6 is a schematic view of still another illustrative embodiment of a power generation system not forming part of the invention;
FIG. 7 is a schematic view of a further illustrative embodiment of a power generation system not forming part of the invention and
FIG. 8 is a schematic view of another illustrative embodiment of a power generation system not forming part of the invention.

### DETAILED DESCRIPTION

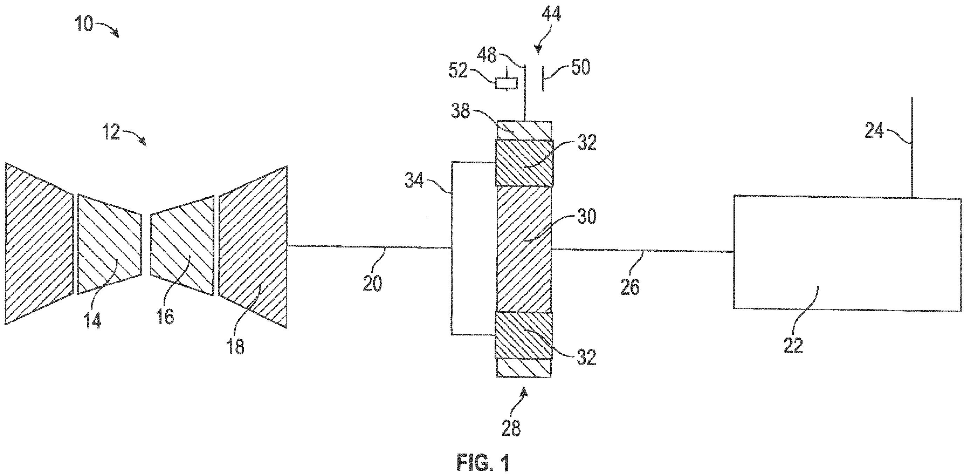

Shown in FIG. 1 is an embodiment of an electrical power generation system 10. The electrical power generation system 10 includes a prime mover, for example, an engine 12 such as a gas turbine engine for an aircraft or other vehicle. The gas turbine engine 12 generally includes a compressor 14 for pressurizing the air received into the engine 12 and a combustor 16 wherein the compressed air is mixed with fuel and ignited for generating combustion gases. The engine 12 further includes a turbine section 18 for extracting energy from the combustion gases and drive an output shaft 20.

The engine 12 is operably connected to a generator 22, which converts rotational energy received at the generator 22 into electrical power that may be transmitted by one or more output wires 24 to be utilized by systems of the aircraft, such as aircraft control systems, environmental control systems, weapons systems, and the like. The output shaft 20 is connected to the generator 22 by a generator shaft 26 through a gearbox 28.

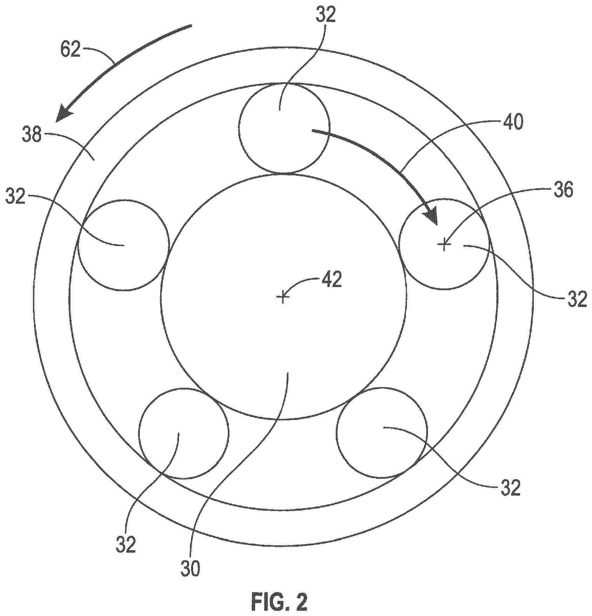

The gear box 28 is a planetary gear arrangement. The generator shaft 26 is connected to a sun gear 30, and the output shaft 20 is connected to a plurality of planet gears 32 arranged around and meshed with the sun gear 30. A planet gear carrier 34 connects the planet gears 32 to the output shaft 20 to transfer the rotational energy of the output shaft 20 to the planet gears 32 to drive orbit of the planet gears 32 around the sun gear 30, while allowing the planet gears 32 to rotate about their respective planet gear axes 36. Referring to FIG. 2, in some embodiments the plurality of planet gears 32 may include five planet gears 32, but in other embodiments other numbers of planet gears 32 may be utilized. A ring gear 38 surrounds the plurality of planet gears 32 and is meshed with the planet gears 32. The gear box 28 is configured to transfer rotational energy from the output shaft 20. In normal operation, the ring gear 38 is not rotationally fixed, allowing the rotational energy from the output shaft 20 to drive the orbit of the plurality of planet gears 32 in a first direction 40 about a gear axis 42 located at a center of the sun gear 30. The orbit of the planet gears 32 in the first direction 40 drives rotation of the ring gear 38 in a second direction 62 opposite the first direction 40. The normal operation of the gear box 28 does not drive rotation of the sun gear 30 to drive the generator 22 and generate electrical power.

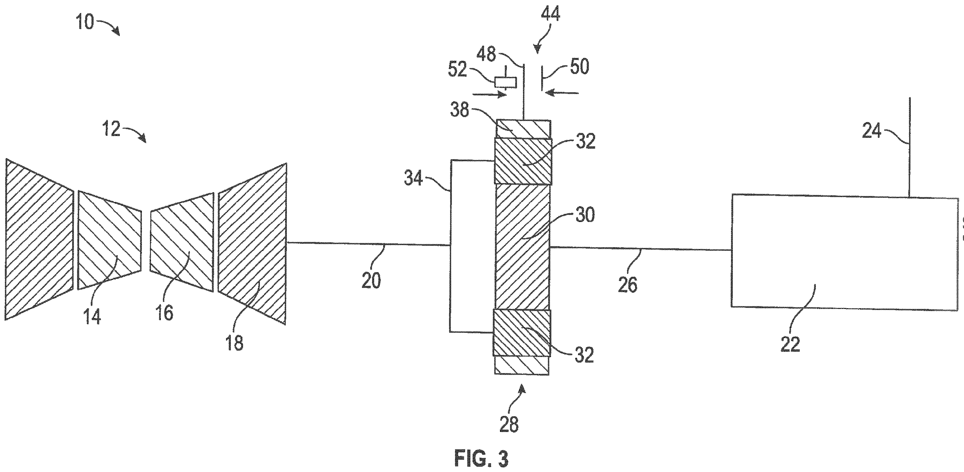

To drive rotation of the sun gear 30 and generation of electrical power by the generator 22, the ring gear 38 is selectably rotationally fixed. In some embodiments, referring again to FIG. 1, the gear box 28 includes a clutching mechanism, for example, a braking mechanism 44. The braking mechanism 44 is connected to a control system (not shown) that signals the braking mechanism 44 to stop rotation of the ring gear 38 when desired. Referring to FIG. 3, stoppage of rotation of the ring gear 38 results in rotation of the planet gears 32 in the first direction 40 driving rotation of the sun gear 30 in the second direction 62. Rotation of the sun gear 30 in the second direction 62 drives rotation of the generator shaft 26 and thus generation of electrical power at the generator 22.

The braking mechanism 44 includes a braking disc 48 fixed to the ring gear 38 and one or more brake calipers 50 engageable with the braking disc 48 to slow or stop rotation of the braking disc 48, and thus slow or stop rotation of the ring gear 38. In some embodiments, the braking disc 48 is a separate component secured to the ring gear 38, while in other embodiments the braking disc 48 may be an integral portion of the ring gear 38, for example, a flange of the ring gear 38. In some embodiments, the braking mechanism 44 includes a detent 52, which locks the position of the ring gear 38 once the rotation of the ring gear 38 is stopped, so that the friction between the braking disc 48 and the brake calipers 50 is not required to carry the subsequent torque. When operation of the generator 22 is not desired, the braking mechanism 44 is disengaged, allowing the ring gear 38 to rotate and stop transmission of rotational energy through the sun gear 30 to the generator 22. While a braking disc 48 and brake calipers 44 are shown in the figure and described herein, it is to be appreciated that other types of braking mechanisms may be utilized, such as a cone brake, band brake or drum brake.

The braking mechanism 44 allows for intermittent, as needed, operation of the generator 22. Further, the braking mechanism 44 is not directly part of the power train, but does carry torque during operation of the generator 22.

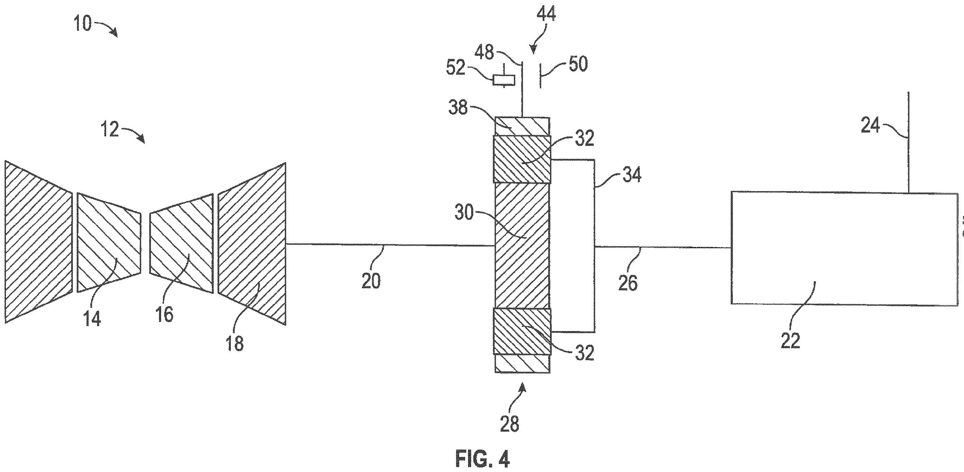

It is to be appreciated, however, that the embodiment of FIG. 3 is merely an example, with additional embodiments illustrated in FIGs. 4- 8, which may be utilized depending on operational requirements, such as specific required generator 22 speeds and/or engine 12 speed. In the embodiment of FIG. 4, the generator shaft 26 is connected to the planet gear carrier 34, and the output shaft 20 is connected to the sun gear 30, while the braking mechanism 44 is located at the ring gear 38.

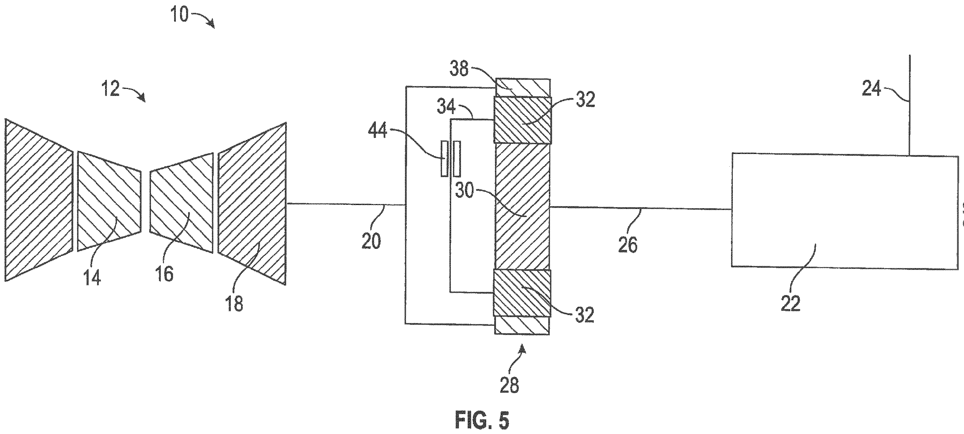

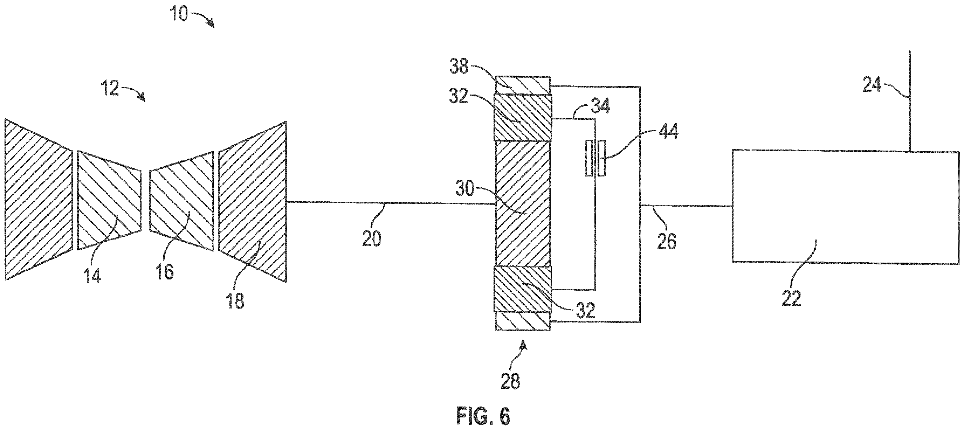

In other embodiments, the braking mechanism 44 may be located at other portions of the gear box 28. For example, in the embodiment of FIG. 5, the generator shaft 26 is connected to the sun gear 30, and the output shaft 20 is connected to the ring gear 38, while the braking mechanism 44 is located at the planet gear carrier 34 such that the braking mechanism 44 stops orbit of the planet gears 32 around the sun gear 30 when engaged with the planet gear carrier 34. Similarly, in the embodiment of FIG. 6, the braking mechanism 44 is located at the planet gear carrier 34, while the generator shaft 26 is connected to the ring gear 38 and the output shaft is connected to the sun gear 30.

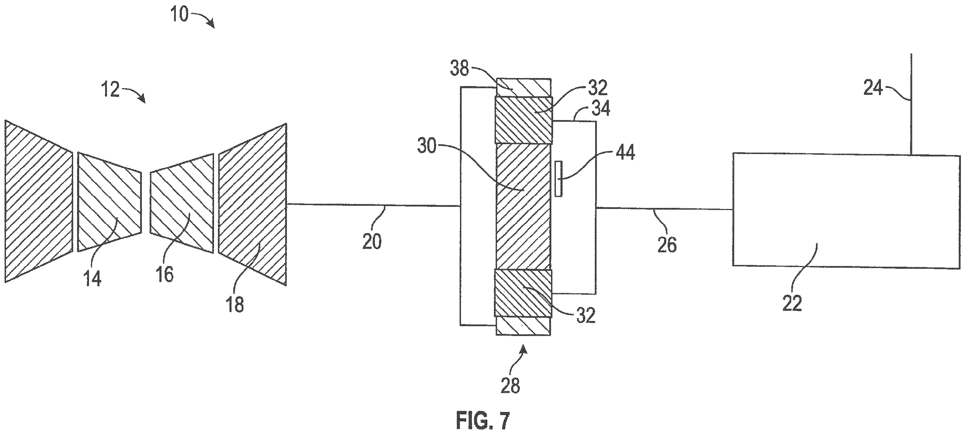

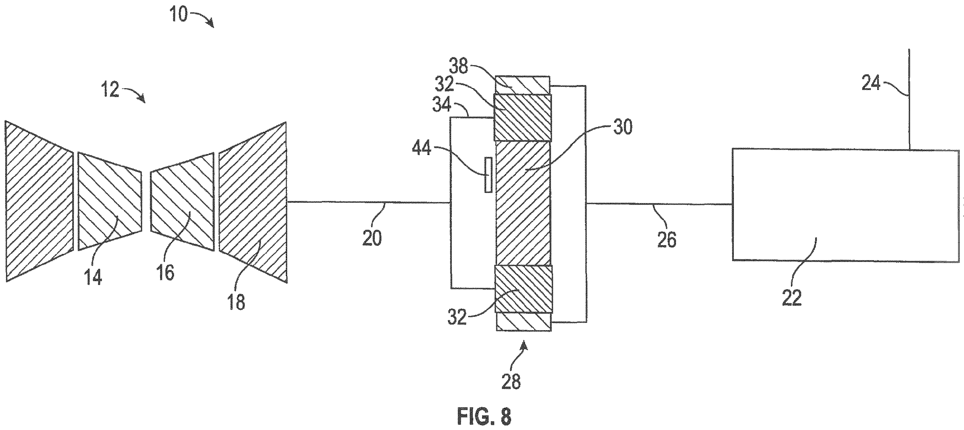

In the embodiment of FIG. 7, the braking mechanism is located at the sun gear 30, while the generator shaft 26 is connected to the planet gear carrier 34, and the output shaft 20 is connected to the ring gear 38. Alternatively, as shown in FIG. 8, the generator shaft 26 is connected to the ring gear 38, and the output shaft 20 is connected to the planet gear carrier 34.

## Claims

1. An electrical power generation (10) system for a vehicle comprising:
a prime mover (12);
an electrical generator (22) to generate electrical power;
a gear box (28) operably connected to the prime mover (12) and the electrical generator to transfer rotational energy from the prime mover to the electrical generator; and
a braking mechanism at the gear box (28) to selectably transfer rotational energy from the prime mover to the electrical generator for selective generation of electrical power, wherein the gear box includes a planetary gear arrangement, and **characterized in that** the planetary gear arrangement includes:
a sun gear (30) connected to the generator via a generator shaft (26);
a plurality of planet gears (32) meshed with the sun gear and configured to traverse about a sun gear axis; and
a ring gear (38) meshed with and disposed radially outboard of the plurality of planet gears;
wherein the prime mover (12) is coupled to one of the plurality of planet gears (32) or the ring gear (38); and
wherein the braking mechanism is disposed at the other of the plurality of planet gears (32) or the ring gear (38) to stop of rotation of the ring gear (38) or traversal of the plurality of planet gears (32).

2. The electrical power generation system of claim 1, further comprising a planet carrier to couple the prime mover to the plurality of planet gears (32).

3. The electrical power generation system of any preceding claim, wherein the braking mechanism includes a locking mechanism to maintain engagement of the braking mechanism.

4. The electrical power generation system of any preceding claim, wherein the prime mover is a gas turbine.

5. A method of electrical power generation for a vehicle by operating the electrical power generation system of claim 1, the method comprising:
generating rotational energy at a prime mover (12);
transferring the rotational energy to an electrical power generator (22);
generating electrical power via the rotational energy transfer to the electrical power generator; and
periodically stopping and/or starting the transfer of rotational energy from the prime mover (12) to the electrical power generator via a braking mechanism in operable communication with the electrical power generator.

6. The method of claim 5 further comprising transferring the rotational energy from the prime mover (12) to the electrical power generator through a planetary gear arrangement.

7. The method of claim 6, further comprising:
transferring the rotational energy from the prime mover (12) to said plurality of planet gears (32);
transferring the rotational energy from the plurality of planet gears (32) to said sun gear (30) meshed with the plurality of planet gears; and
transferring the rotational energy from the sun gear (30) to the electrical power generator (22).

8. The method claim 7, further comprising transferring the rotational energy from the plurality of planet gears (32) to the sun gear (30) by stopping rotation of said ring gear meshed with the plurality of planet gears (32) via engagement of a braking mechanism at the ring gear (38).

9. The method of claim 8 , further comprising selectably stopping the transfer of rotational energy from the plurality of planet gears (32) to the sun gear (30) by disengagement of the braking mechanism.

10. The method of claim 8 , wherein the braking mechanism includes a locking mechanism to maintain engagement of the braking mechanism.

11. The method of any of claims 5 to 10, wherein the prime mover (12) is a gas turbine.

## Patentansprüche

1. System zur Generierung elektrischer Leistung (10) für ein Fahrzeug, das Folgendes umfasst:
eine Antriebsmaschine (12);
einen elektrischen Generator (22), um elektrische Leistung zu generieren;
ein Getriebe (28), das mit der Antriebsmaschine (12) und dem elektrischen Generator wirkverbunden ist, um Rotationsenergie von der Antriebsmaschine auf den elektrischen Generator zu übertragen; und
einen Bremsmechanismus an dem Getriebe (28), um wahlweise Rotationsenergie von der Antriebsmaschine auf den elektrischen Generator zur wahlweisen Generierung von elektrischer Leistung zu übertragen, wobei das Getriebe eine Planetenradanordnung beinhaltet und **dadurch gekennzeichnet ist, dass** die Planetenradanordnung Folgendes beinhaltet:
ein Sonnenrad (30), das mit dem Generator über eine Generatorwelle (26) verbunden ist;
eine Vielzahl von Planetenrädern (32), die mit dem Sonnenrad verzahnt und dazu konfiguriert ist, eine Sonnenradachse zu überschreiten; und
ein Hohlrad (38), das mit der Vielzahl von Planetenrädern verzahnt und radial außerhalb dieser angeordnet ist;
wobei die Antriebsmaschine (12) an eines der Vielzahl von Planetenrädern (32) oder das Hohlrad (38) gekoppelt ist; und
wobei der Bremsmechanismus an der anderen der Vielzahl von Planetenrädern (32) oder dem Hohlrad (38) angeordnet ist, um eine Rotation des Hohlrads (38) oder ein Überschreiten der Vielzahl von Planetenrädern (32) zu stoppen.

2. System zur Generierung elektrischer Leistung nach Anspruch 1, das ferner einen Planetenträger umfasst, um die Antriebsmaschine an die Vielzahl von Planetenrädern (32) zu koppeln.

3. System zur Generierung elektrischer Leistung nach einem der vorhergehenden Ansprüche, wobei der Bremsmechanismus einen Verriegelungsmechanismus beinhaltet, um eine Ineingriffnahme des Bremsmechanismus aufrechtzuerhalten.

4. System zur Generierung elektrischer Leistung nach einem der vorhergehenden Ansprüche, wobei es sich bei der Antriebsmaschine um eine Gasturbine handelt.

5. Verfahren zur Generierung elektrischer Leistung für ein Fahrzeug durch Betreiben des Systems zur Generierung elektrischer Leistung nach Anspruch 1, wobei das Verfahren Folgendes umfasst:
Generieren von Rotationsenergie an einer Antriebsmaschine (12) ;
Übertragen der Rotationsenergie auf einen elektrischen Generator (22);
Generieren von elektrischer Leistung über die Übertragung von Rotationsenergie auf den elektrischen Leistungsgenerator; und
periodisches Stoppen und/oder Starten der Übertragung von Rotationsenergie von der Antriebsmaschine (12) auf den elektrischen Leistungsgenerator über einen Bremsmechanismus in Wirkkommunikation mit dem elektrischen Leistungsgenerator.

6. Verfahren nach Anspruch 5, das ferner ein Übertragen der Rotationsenergie von der Antriebsmaschine (12) auf den elektrischen Leistungsgenerator durch eine Planetenradanordnung umfasst.

7. Verfahren nach Anspruch 6, das ferner Folgendes umfasst:
Übertragen der Rotationsenergie von der Antriebsmaschine (12) auf die Vielzahl von Planetenrädern (32);
Übertragen der Rotationsenergie von der Vielzahl von Planetenrädern (32) auf das Sonnenrad (30), das mit der Vielzahl von Planetenrädern verzahnt ist; und
Übertragen der Rotationsenergie von dem Sonnenrad (30) auf den elektrischen Leistungsgenerator (22).

8. Verfahren nach Anspruch 7, das ferner ein Übertragen der Rotationsenergie von der Vielzahl von Planetenrädern (32) auf das Sonnenrad (30) durch Stoppen einer Rotation des Hohlrads, das mit der Vielzahl von Planetenrädern (32) verzahnt ist, über eine Ineingriffnahme eines Bremsmechanismus an dem Hohlrad (38) umfasst.

9. Verfahren nach Anspruch 8, das ferner ein wahlweises Stoppen der Übertragung von Rotationsenergie von der Vielzahl von Planetenrädern (32) auf das Sonnenrad (30) durch Lösung des Bremsmechanismus umfasst.

10. Verfahren nach Anspruch 8, wobei der Bremsmechanismus einen Verriegelungsmechanismus beinhaltet, um eine Ineingriffnahme des Bremsmechanismus aufrechtzuerhalten.

11. Verfahren nach einem der Ansprüche 5 bis 10, wobei es sich bei der Antriebsmaschine (12) um eine Gasturbine handelt.

## Revendications

1. Système de génération d'énergie électrique (10) pour un véhicule comprenant :
un appareil moteur (12) ;
un générateur électrique (22) pour générer de l'énergie électrique ;
une boîte de vitesses (28) reliée de manière opérationnelle à l'appareil moteur (12) et au générateur électrique pour transférer l'énergie de rotation de l'appareil moteur au générateur électrique ; et
un mécanisme de freinage au niveau de la boîte de vitesses (28) pour transférer de manière sélective l'énergie de rotation de l'appareil moteur au générateur électrique pour la génération sélective d'énergie électrique, dans lequel la boîte de vitesses comporte un agencement d'engrenages planétaires, et **caractérisé en ce que** l'agencement d'engrenages planétaires comporte :
une roue solaire (30) reliée au générateur via un arbre de générateur (26) :
une pluralité d'engrenages planétaires (32) engrenés avec la roue solaire et conçus pour se déplacer autour d'un axe de roue solaire ; et
une couronne (38) engrenée avec la pluralité d'engrenages planétaires et disposée radialement à l'extérieur de ceux-ci ;
dans lequel l'appareil moteur (12) est couplé à un de la pluralité d'engrenages planétaires (32) ou à la couronne (38) ; et
dans lequel le mécanisme de freinage est disposé au niveau de l'autre de la pluralité d'engrenages planétaires (32) ou de la couronne (38) pour arrêter la rotation de la couronne (38) ou le déplacement de la pluralité d'engrenages planétaires (32).

2. Système de génération d'énergie électrique selon la revendication 1, comprenant en outre un porte-satellites pour coupler l'appareil moteur à la pluralité d'engrenages planétaires (32).

3. Système de génération d'énergie électrique selon une quelconque revendication précédente, dans lequel le mécanisme de freinage comporte un mécanisme de verrouillage pour maintenir la mise en prise du mécanisme de freinage.

4. Système de génération d'énergie électrique selon une quelconque revendication précédente, dans lequel l'appareil moteur est une turbine à gaz.

5. Procédé de génération d'énergie électrique pour un véhicule en exploitant le système de génération d'énergie électrique selon la revendication 1, le procédé comprenant :
la génération d'énergie de rotation au niveau d'un appareil moteur (12) ;
le transfert de l'énergie de rotation à un générateur d'énergie électrique (22) ;
la génération d"énergie électrique via le transfert d'énergie de rotation au générateur d'énergie électrique ; et
l'arrêt et/ou le démarrage périodique du transfert d'énergie de rotation de l'appareil moteur (12) au générateur d'énergie électrique via un mécanisme de freinage en communication fonctionnelle avec le générateur d'énergie électrique.

6. Procédé selon la revendication 5, comprenant en outre le transfert de l'énergie de rotation de l'appareil moteur (12) au générateur d'énergie électrique à travers un agencement d'engrenages planétaires.

7. Procédé selon la revendication 6, comprenant en outre :
le transfert de l'énergie de rotation de l'appareil moteur (12) à ladite pluralité d'engrenages planétaires (32) ;
le transfert de l'énergie de rotation de la pluralité d'engrenages planétaires (32) à ladite roue solaire (30) engrenée avec la pluralité d'engrenages planétaires ; et
le transfert de l'énergie de rotation de la roue solaire (30) au générateur d'énergie électrique (22).

8. Procédé selon la revendication 7, comprenant en outre le transfert de l'énergie de rotation de la pluralité d'engrenages planétaires (32) à la roue solaire (30) en arrêtant la rotation de ladite couronne engrenée avec la pluralité d'engrenages planétaires (32) via la mise en prise d'un mécanisme de freinage au niveau de la couronne (38).

9. Procédé selon la revendication 8, comprenant en outre l'arrêt sélectif du transfert d'énergie de rotation de la pluralité d'engrenages planétaires (32) à la roue solaire (30) par libération du mécanisme de freinage.

10. Procédé selon la revendication 8, dans lequel le mécanisme de freinage comporte un mécanisme de verrouillage pour maintenir la mise en prise du mécanisme de freinage.

11. Procédé selon l'une quelconque des revendications 5 à 10, dans lequel l'appareil moteur (12) est une turbine à gaz.
